# EUROPEAN PATENT SPECIFICATION

(11) **EP 2 796 713 B1**
(45) Date of publication and mention of the grant of the patent: **22.03.2017**
(21) Application number: 12859045.2
(22) Date of filing: 19.12.2012
(51) Int. Cl.: B63B 5/16, B63B 35/44

(54) **FLOATING PRECAST-CONCRETE STRUCTURE FOR SUPPORTING A WIND TURBINE**
SCHWIMMENDE STRUKTUR AUS EINEM VORGEGOSSENEN BETON ZUM STÜTZEN EINER WINDTURBINE
STRUCTURE FLOTTANTE PRÉFABRIQUÉE EN BÉTON POUR SUPPORT D'ÉOLIENNE

(30) Priority: 23.12.2011 ES 201132097
(43) Date of publication of application: 29.10.2014
(73) Proprietor: Universitat Politècnica De Catalunya, 08034 Barcelona (ES)
(72) Inventor: MOLINS BORRELL, Climent, E-08034 Barcelona (ES); REBOLLO PERICOT, Josep, E-08034 Barcelona (ES); CAMPOS HORTIGÜELA, Alexis, E-08034 Barcelona (ES)
(74) Representative: Juncosa Miro, Jaime
(86) International application number: PCT/ES2012/070884
(87) International publication number: WO 2013/093160

(56) References cited:
- WO-A1-98/21415
- WO-A1-98/21415
- WO-A2-2012/061710
- FR-A- 498 033
- JP-A- 2002 188 557
- JP-A- 2009 018 671
- US-A- 3 360 810
- "CONCRETE ADDED TO SPAR OPTIONS", OFFSHORE ENGINEER, THOMAS TELFORD, LONDON, GB, 1 April 1996 (1996-04-01), page 29,31,33, XP000783917, ISSN: 0305-876X

## Description

### Field of the Invention

The present invention concerns a floating structure according to the preamble of claim 1.

In particular, the main object of the invention relates to a floating structure made of concrete for supporting high power wind turbines. It is encompassed in the scope of renewable energies, specifically in harnessing wind energy in the sea, proposing the use thereof in maritime areas having a great depth of more than one hundred and fifty meters.

### Prior Art

In the context of global trend that tends towards the use of renewable energies including, among others, the technology referring to extraction of electrical energy from the wind, it has experienced significant technological and R&D advancement over a short time period.

The most significant advancements have been referred and still refer to wind turbines with much higher powers, lighter and with longer service life than their predecessors. This has allowed planning and using structure designs for supporting wind turbines located in the sea, where the costs relating to the foundation necessary for these structures are considerably more significant than in structures with foundations on land (onshore) and which together with high power wind turbines which, on the other hand, do not require supporting structures that are significantly more expensive than the costs for their predecessors, allow from a business point of view for absorbing the extra costs derived from the positioning in the sea which are compensated with greater installed potential.

Even though the marine wind power generation technology has been proven to have various advantages up until now, they are affected due to the difficulty in finding marine locations with favorable wind conditions as well as with bathymetries that allow fixing these structures in maximum depths of the order of 50 meters at a certain distance away from the shore, where it is possible to install large marine wind farms that do not generate significant impact, mainly visual impact from the point of view of social acceptance of the infrastructure.

The foregoing makes designing floating platforms for supporting wind turbines comprehensible since they allow installing large wind farms away from the shore and regardless of the depth of the area considered.

Until now, some patents concerning to different designs of floating platforms for said purpose have been developed, among which WO2010106208 and WO2006132539 stand out since they allow by their simplicity assuring system stability without having the need for active stability control elements apart from those typical of wind turbines.

Patent US20060165493 describes a design formed by 3 different flotation points with an active ballast fluid transfer system between them which involves significant maintenance costs, in addition to an increased cost due to the existence of the several flotation points.

Other designs such as those presented in WO2010110329 and WO2010110330 maintain a philosophy similar to that proposed in WO2006132539, introducing installation methods that allow facilitating the placement thereof in the end site.

In all the preceding cases, the basic construction material is steel, some of them (WO2010110329 and WO2010110330) limiting the use of concrete to the production of the ballast weight.

The document US 3, 360, 810 represents the closest prior art and discloses a floating structure according to the preamble of claim 1.

### Disclosure of the Invention

The platform object of the present invention is based on a floating precast monolithic SPAR structure made of reinforced and prestressed concrete having cylindrical and frustoconical geometries.

The structure allows assuring stability, adopting maximum keel angles of the order of 4° to 10°, which can be borne perfectly by the existing wind turbines.

The main novelty introduced with respect to other existing patents such as WO2006132539 is the consideration of concrete as a basic construction material in said structure.

By comparing concretes with steels in highly aggressive chloride environments, such as the case of a marine environment, concretes have a very good durability with significant reduction in inspection and maintenance task, the use of special protective paints and sacrifice anodes not being necessary. Likewise, although normal concretes have a low permeability, the use of certain additional elements that allows increasing both the compactness (impermeability) and the final resistance of the concrete is proposed.

System stability is based on the generation of a stabilizing torque due to the distance between the center of buoyancy (CdC) and the center of gravity (CdG) of the system. Unlike other solutions such as that proposed in WO2010106208, where the geometry plays a very important role in maximizing the distance between the CdG and the CdC, there has been provided in this case simple geometry which allows concreting without complex geometries or singular elements, assuring the necessary separation between CdG and CdC as a result of using materials, such as certain types of aggregates, with a density/cost ratio that allows drastically lowering the CdG of the system without involving an unfeasible cost for performing same.

The structure is formed by a hollow, cylindrical lower section which acts as a flotation element and another cylindrical and/or frustoconical upper section, located above sea level, which acts as a support for the wind turbine. There being envisaged in both sections the arrangement of different openings connecting the inside of the structure with the outside, with the corresponding opening/sealing systems thereof, for construction and/or maintenance purposes.

Due to the fact that concrete is barely resistant to tensile stresses and that it is a structure where the external actions generate high bending stresses, the structure must be prestressed to prevent concrete decompression, preventing failures as a result of traction as well as possible cracks that may affect the leak-tightness of the system.

The base of the lower section has a hemispheric shape so that the hydrostatic pressure assures that the concrete is well confined, minimizing the bending stresses and allowing an optimal travel for shields for prestressed reinforcement bars.

The attachment between wind turbine and the concrete structure is carried out by end crowning the structure with a steel ring-shaped plate which allows connecting same and the rotating crown of the nacelle of the wind turbine. Additionally, this plate acts as a distribution plate for the prestressing of the envisaged prestressed reinforcement bars, such that the concrete-plate-wind turbine attachment is perfectly assured.

The structure is fixed to the seabed by means of cable lines, tending to prevent to the maximum possible extent deformation due to their own weight which produces the typical catenary shape. This effect is envisaged to be solved by reducing the weight of the cables when submerged by means of added elements thereon, such that the actual weight of the cables is partially compensated for with the flotation produced by the added elements. The effect to be achieved is to limit the vertical component on the structure induced by the stress to which the cable is subjected. Additionally, by minimizing the deformation of the cable due to its own weight, higher horizontal rigidity is achieved at the fixing points of the structure, minimizing their movements.

This property can be achieved by means of new polymer materials which, unlike the proposed system, have little-known long-term rheological characteristics and properties with respect to fatigue stresses of the material, so the proposal is innovative from the point of view of attaining certain interesting properties of new materials, avoiding the uncertainty posed by same.

By minimizing their deformation due to their own weight, these acquire an almost rectilinear shape which, unlike the typical systems with catenary type deformed cables, causes a significant vertical reaction at the fixing point on the seabed. This results in the need for laying foundations which allows withstanding said vertical components. The proposed foundations must be of the ballast type with own weight or suction piles, depending on the geotechnical characteristics of the earth forming the seabed.

Additionally, the actual diameter of the flotation cylinder allows having a stabilizing torque for stabilizing the twisting movement of the structure through the torques introduced by the attachment of the cables thereto.

The proposed system will allow greater ease for construction in series with respect to the conventional steel structures, due to the versatility of the large scale production of concrete elements, reducing the cost per MW installed in a very significant manner.

Similarly to the inventions cited previously, the structure can be towed throughout the service life thereof for maintenance or relocation purposes.

### Brief Description of the Drawings

Drawings aiding to better understand the invention and referring directly to the invention, which are provided by way of non-limiting example without, are briefly described below.
Figure 1 shows a diagrammatic side view of the floating concrete structure for supporting a wind turbine.
Figure 2 shows a diagrammatic detail view of a hemispheric section ending the float section.
Figure 3 shows a diagrammatic view of a plate for structure-wind turbine connection.

### Description of an Embodiment

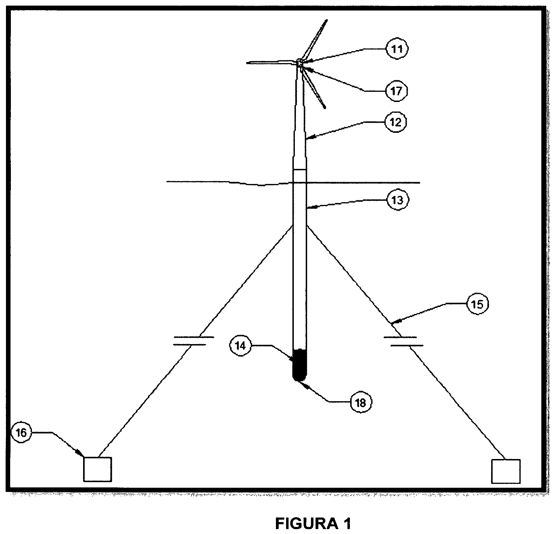

As seen Figure 1, the structure consists of a frustoconical upper concrete section 12 that finishes on the upper portion thereof in a steel plate 17 for connection with the wind turbine 11.

The flotation of the system is assured by means of a cylindrical concrete element 13 having a certain leeway on the average level of the sea surface and is ballasted by means of adding aggregate and water on the lower portion 14 thereof. The cylindrical concrete element 13 is finished on the lower portion thereof by means of a hemispheric cap 18 to assure that the concrete in the area works fundamentally under compression and that cracks do not form due to the tensile stresses resulting from possible bending or pulling. The entire structure is outlined by means of using prestressed reinforcement steel bars so as to assure that the concrete does not decompress throughout its service life in order to prevent cracks and the consequences thereof from the point of view of durability.

The dimensions of the structure depend fundamentally on the actions to be applied in each case, being possible to adapt them according to the different needs of one case or another due to their geometric simplicity. The dimensions can vary in a range of diameters of between 5 and 15 meters and a draft of between 80 and 150 meters, with thickness that can vary from 20 to 100 centimeters. The frustoconical portion can have various heights depending on the wind turbine installed, wind conditions, etc. The diameter thereof comprised between the diameter of the lower cylinder and an upper diameter between 3 and 5 m, depending on the wind turbine model.

In the section close to the surface of the sea level, the cylindrical section of the float can be maintained or the diameter can somehow be reduced to attain a structure that is more permeable to the wave effect. In the drawing shown the diameter is maintained throughout the entire cylinder.

The structure is fixed to the seabed by means of cable lines 15 arranged symmetrically and with their weight minimized when submerged such that they acquire an almost rectilinear shape instead an obvious catenary shape. The float has a controlled flood and discharge system to enable adjusting both the flotation line and the initial stress in the fixing cables.

The fixing in seabed 16 is performed through heavy ballasting elements or suction piles, capable of counteracting the significant vertical and horizontal components induced by the cables in the bed, unlike the typical systems of anchor or less-weighed ballasts.

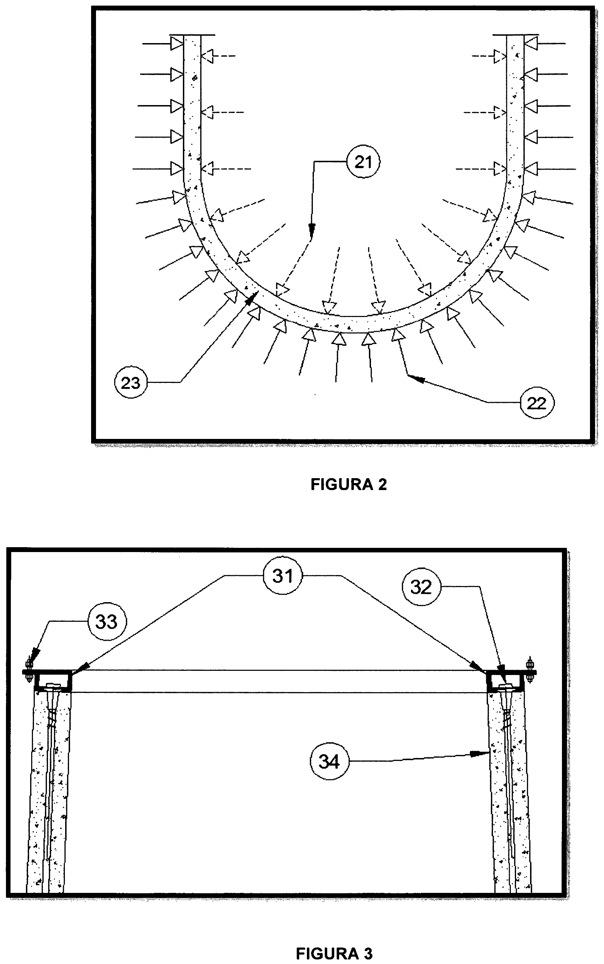

Figure 2 shows a detail of the lower finishing of the cylindrical section of the float by means of a hemispheric concrete cap 23, the thickness of which can vary between 30 and 100 cm, which allows giving continuity to the tendons of active reinforcement bars of the structure and which in turn allows distributing the pressure difference between the hydrostatic load of the water 22 and the inner pressure generated by the ballast 21 in the form of compression through the concrete, eliminating possible bending stresses on the element and therefore eliminating the risk of tractions and cracks.

Figure 3 shows a detail of the structure-wind turbine connection, by means of a steel ring-shaped plate 31 mounted at the end of the concrete structure 34 and fixed thereto by means of the prestressing system itself, in which the steel ring-shaped plate acts as a distribution plate for the anchoring elements 32. Said plate has perimetric cantilevers that allow the connection of the wind turbine 33, such that a perfect plate-concrete attachment and plate-wind turbine attachment is assured.

## Claims

1. A floating structure for supporting wind turbines or other elements, comprising a cylindrical lower section (13) finished at a lower end thereof by a hemispheric cap (18), and which contains ballast and acts as a flotation element, and a cylindrical and/or frustoconical upper section (12), located above sea level, which acts as a support for a wind turbine or another element, **characterized in that** said floating structure is a precast monolithic structure made of reinforced and prestressed concrete having a total length comprised between 110 and 320 meters and comprising prestressed reinforcement steel bars which have continuity through said hemispheric cap (18),
wherein said cylindrical and/or frustoconical upper section (12) is finished at an upper end thereof with a steel ring-shaped plate (17, 31) to which said prestressed reinforcement steel bars are anchored.

2. The floating structure according to claim 1, **characterized by** having outer diameters comprised between 2.8 and 15.2 meters and thickness comprised between 20 and 100 centimeters.

3. The floating structure according to claim 1 or 2, **characterized in that** said prestressed reinforcement steel bars are steel tendons embedded in the concrete and anchored at different points of the structure.

4. The floating structure according to claim 3, **characterized in that** said steel tendons have protective shields.

5. The floating structure according to any one of the preceding claims, **characterized in that** the concrete structure is attached to the wind turbine or another element through said steel ring-shaped plate (17, 31), which performs a double function as an attachment for the wind turbine or another element and as a distribution plate for upper anchors of the prestressed reinforcement steel bars.

6. The floating structure according to any one of the preceding claims, **characterized in that** said precast monolithic structure is moored to the seabed by cables having additional elements made of a low density material which compensate for at least 50% of the weight of said cables for fixing to the seabed when submerged.

## Patentansprüche

1. Schwimmende Struktur zum Stützen von Windturbinen oder anderen Elementen, umfassend einen zylindrischen unteren Abschnitt (13), welcher an einem unteren Ende desselben mit einer halbkugelförmigen Kappe (18) endet, und welcher Ballast beinhaltet und als schwimmendes Element agiert, und einen zylindrischen und/oder kegelstumpfförmigen oberen Abschnitt (12), welcher über dem Meeresspiegel liegt und welcher als Stütze für eine Windturbine oder ein anderes Element agiert, **dadurch gekennzeichnet, dass** die genannte schwimmende Struktur eine vorgegossene monolithische Struktur aus verstärktem und vorgespanntem Beton ist, mit einer gesamten Länge, welche zwischen 110 und 320 Metern liegt, und umfassend vorgegossene Verstärkungsstahlstäbe, welche Kontinuität durch die genannte halbkugelförmige Kappe (18) aufweisen, wobei der genannte zylindrische und/oder kegelstumpfförmige obere Abschnitt (12) an einem oberen Ende desselben mit einer ringförmigen Stahlplatte (17, 31) endet, in welcher die genannten vorgespannten Verstärkungsstahlstäben verankert sind.

2. Schwimmende Struktur nach Anspruch 1, **dadurch gekennzeichnet, dass** sie Außendurchmesser, welche zwischen 2,8 und 15,2 Metern liegen, und eine Dicke, welche zwischen 20 und 100 Zentimetern liegt, aufweist.

3. Schwimmende Struktur nach den Ansprüchen 1 oder 2, **dadurch gekennzeichnet, dass** die genannten vorgespannten Verstärkungsstahlstäbe Vorspannglieder aus Stahl sind, welche im Beton eingebettet sind und in unterschiedlichen Punkten der Struktur verankert sind.

4. Schwimmende Struktur nach Anspruch 3, **dadurch gekennzeichnet, dass** die genannten Vorspannglieder aus Stahl Schutzschilder aufweisen.

5. Schwimmende Struktur nach einem der vorhergehenden Ansprüche, **dadurch gekennzeichnet, dass** die Betonstruktur an der Windturbine oder einem anderen Element durch die genannte ringförmige Stahlplatte (17, 31) befestigt ist, welche eine doppelte Funktion erfüllt, als Befestigung für die Windturbine oder ein anderes Element und als Verteilerplatte für obere Verankerungen der vorgespannten Verstärkungsstahlstäbe.

6. Schwimmende Struktur nach einem der vorhergehenden Ansprüche, **dadurch gekennzeichnet, dass** die genannte vorgegossene monolithische Struktur zum Meeresboden mittels Kabel festgemacht ist, welche zusätzliche Elemente aus einem Material mit niedriger Dichte aufweisen und welche mindestens 50% des Gewichts der genannten Kabel kompensieren, zur Fixierung am Meeresboden in einem eingetauchten Zustand.

## Revendications

1. Une structure flottante pour porter des éoliennes ou autres éléments, comportant une section inférieure cylindrique (13) finie à une de ses extrémités inférieures par un capuchon hémisphérique (18) et qui contient un lest et agit comme élément de flottation, et une section supérieure cylindrique et/ou tronconique (12) située au-dessus du niveau de la mer, qui agit comme support pour une éolienne ou un autre élément, **caractérisée en ce que** cette structure flottante est une structure monolithique faite en béton armé ou précontraint ayant une longueur totale comprise entre 110 et 320 mètres et comportant des fers à béton précontraint en acier ayant une continuité à travers ce capuchon hémisphérique (18);
dans laquelle cette section supérieure cylindrique et/ou tronconique (12) achève à une de ses extrémités supérieures par une plaque annulaire en acier (17,31) sur laquelle ces fers à béton précontraint sont ancrés.

2. La structure flottante conformément à la revendication 1, **caractérisée en ce qu'**elle a des diamètres extérieurs compris entre 2,8 et 15,2 mètres et une grosseur comprise entre 20 et 100 centimètres.

3. La structure flottante conformément à la revendication 1 ou 2, **caractérisée en ce que** ces fers à béton précontraint sont des éléments de précontrainte en acier noyés dans le béton et ancrés à des points différents de la structure.

4. La structure flottante conformément à la revendication 3, **caractérisée en ce que** ces éléments de précontrainte en acier possèdent des boucliers protecteurs.

5. La structure flottante conformément à une quelconque des revendications précédentes, **caractérisée en ce que** la structure en béton est unie à l'éolienne ou autre élément à travers cette plaque annulaire en acier (17, 31), qui exerce une fonction double comme union pour l'éolienne ou autre élément et comme plaque de distribution pour des ancrages supérieurs des fers à béton précontraint en acier.

6. La structure flottante conformément à une quelconque des revendications précédentes, **caractérisée en ce que** cette structure monolithique préfabriquée est amarrée au fond de la mer par des câbles ayant des éléments complémentaires faits en matériau à densité faible qui compensent au moins 50% du poids de ces câbles pour la fixation au fond de la mer lorsqu'elle est submergée.
